# EUROPÄISCHE PATENTANMELDUNG

(11) **EP 0 648 625 A1**
(43) Veröffentlichungstag der Anmeldung: **19.04.1995**
(21) Anmeldenummer: 94116352.9
(22) Anmeldetag: 17.10.1994
(51) Int. Cl.: B60G 21/055

(54) **KFZ-Stabilisator**

(30) Priorität: 19.10.1993 DE 4335528
(71) Anmelder: Pfeifer, Anton, D-93437 Furth (DE)
(72) Erfinder: Pfeifer, Anton, D-93437 Furth (DE)
(74) Vertreter: Zipse + Habersack

(57) **Zusammenfassung**

Bisherige Stabilisatoren für KFZ wirken derart, daß bei zunehmender entgegengesetzter Radbewegung auf derselben Achse die Kraft stetig zunimmt, was bei steifen Stabilisatoren die Verschränkung des Fahrzeugs stark einschränkt.
Mit den erfindungsgemäßen veränderlichen Zug- und Druckstangen kann die Wirkung des Stabilisators auf die notwendigen Rollkräfte begrenzt wrden. Bei größeren notwendigen Radbewegungen nimmt die Kraft nicht weiter zu, d. h. die Federlemente (4) wirken wie eine Art Überdruckventil.

## Beschreibung

Die Erfindung betrifft einen KFZ-Stabilisator gemäß dem Oberbegriff des Anspruchs 1.
Übliche Bauweise für Stabilisatoren sind Drehstabfedern mit gebogenen Enden, meist in einer Art U-Form, mit zwei Lagerstellen und zwei Befestigungspunkten für die Achsteile. Sowohl die Lager als auch die Achsbefestigungen sind üblicherweise als Gummilager ausgebildet. Zwischen den Stabilisatorenden und den Achsteilen sind größtenteils Zug- und Druckstangen in verschiedensten Längen angebracht. Die Wirkungsweise des Stabilisators auf das Fahrverhalten ist dabei als feste Größe vorgegeben, mit der Eigenheit, daß bei notwendigen, größeren entgegengesetzten Radbewegungen auf derselben Achse die Wirkung des Stabilisators kontinuierlich zunimmt. Durch diese Wirkungsweise wird bei steiferem Stabilisator, was den sicheren Fahreigenschaften zugute kommt, eine größere entgegengesetzte Radbewegung unterbunden, d. h. die sogeannte diagonale Verschränkung der Achsen wird stark eingegrenzt.
Im Rennsport hat sich als Stabilsator ein relativ steifes Verbindungsteil (Mittelteil) mit zwei sog. drehbaren Schwertern, die wie eine Art Blattfeder wirken, durchgesetzt. Damit kann man mit geringem Aufwand die Stabilisatorwirkung verändern.

Der Erfindung liegt die Aufgabe zugrunde einen relativ steifen Stabilisator so veränderlich zu gestalten, daß die Kraft des Stabilisators nach Vorgabe begrenzt werden kann, und so eine ausreichende Rollabstützung gewährleistet ist, und größere Kräfte aus Federbewegungen der Räder freigegeben werden.

Diese Aufgabe wird mit einem KFZ-Stabilisator gelöst, wie er durch Anspruch 1 gekennzeichnet ist. Demnach sind zwischen den Stabilisatorenden und den Achsteilen vorgespannte Federelemente, mit oder ohne Dämpfung, angeordnet. Dieses Federelement kann mit einer Druckfeder oder mit einer Gasfeder, z. B. Luft, vorgespannt und zusätzlich mit einer z. B. hydraulischen Dämpfung versehen sein. Das Ziel ist ein relativ steifer Stabilisator, der die notwendigen Rollkräfte aufnimmt und bei größeren auftretenden Kräften aus Federbewegungen, die Bewegungen des jeweiligen Rades freigibt.
Weiter ist es vorgesehen, durch manuelle oder automatische Regelung der Vorspannung die Stabilisatorwirkung dem Fahrzustand anzupassen, z. B. Straßen- oder Geländebetrieb bei Geländeautos oder Fahr- und Rangierbetrieb bei sportlichen Fahrzeugen.

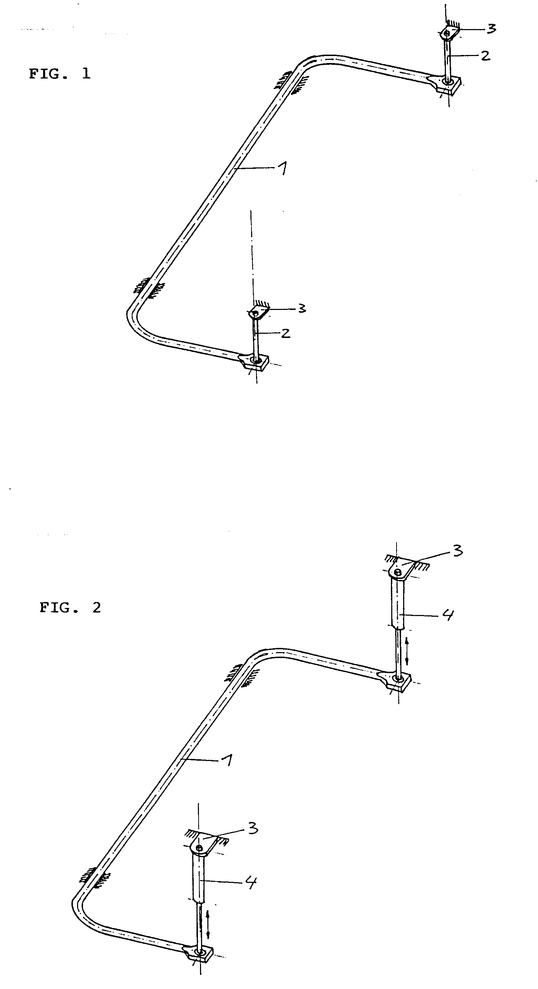

In der Fig. 1 wird ein üblicher Stabilisator gezeigt.
In der Fig. 2 wird ein Stabilisator mit vorgespannten Zug- und Druckstangen nach der Erfindung gezeigt, wobei

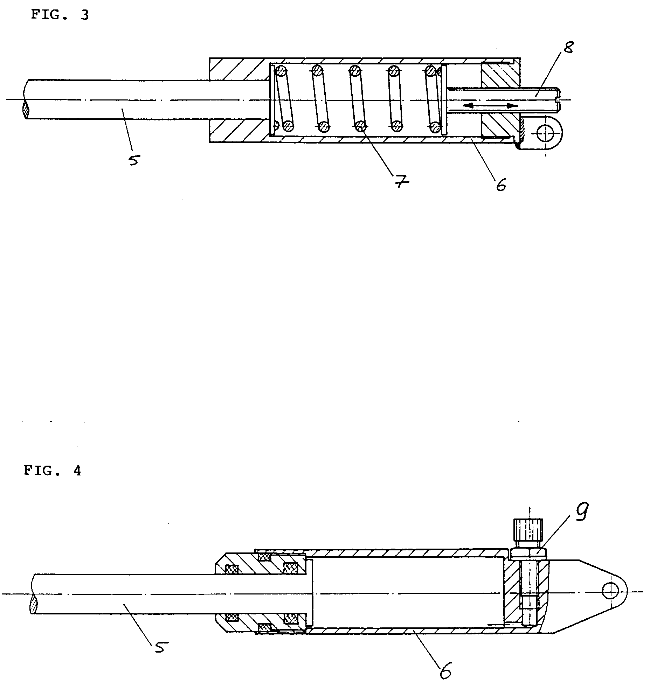

Fig. 3 ein Federlement mit Druckfeder und
Fig. 4 ein Federlement mit Gasfeder zeigen.
In den Zeichnungen zeigen:
1 den Stabilisator,
2 die Zug- und Druckstangen nach dem Stand der Technik,
3 die Achsbefestigung,
4 die Federlemente nach der Erfindung,
5 die Kolbenstange,
6 das Gehäuse,
7 die Druckfeder,
8 die Einstellung der Druckfeder, und
9 das Ventil (Gas, Luft) des Federelements 4.

## Patentansprüche

1. KFZ-Stabilisator mit Zug- bzw. Druckstangen zwischen den Stabilisatorenden und den Radachsen,
dadurch gekennzeichnet,
daß vorgespannte Federelemente (4), mit oder ohne Dämpfung, als Zug- bzw. Druckstangen zwischen den Stabilisatorenden und den Radachsen (3) angeordnet sind.

2. KFZ-Stabilisator nach Anspruch 1,
dadurch gekennzeichnet,
daß die Vorspannung mit einer Druckfeder (7) erreicht wird.

3. KFZ-Stabilisator nach Anspruch 1,
dadurch gekennzeichnet,
daß die Vorspannung durch eine Luft- oder Gasfeder erzeugt wird.

4. KFZ-Stabilisator nach den Ansprüchen 1,2 oder 3,
dadurch gekennzeichnet,
daß die Vorspannung manuell im Stillstand oder durch eine Regelung während der Fahrt verändert werden kann.

5. KFZ-Stabilisator nach den Ansprüchen 1,2,3 oder 4,
dadurch gekennzeichnet,
daß das Federelement (4) zusätzlich mit einer hydraulischen Dämpfung versehen ist.
